# EUROPÄISCHE PATENTSCHRIFT

(11) **EP 0 807 461 B1**
(45) Veröffentlichungstag und Bekanntmachung des Hinweises auf die Patenterteilung: **01.08.2001**
(21) Anmeldenummer: 97107615.3
(22) Anmeldetag: 09.05.1997
(51) Int. Cl.: B01J 19/18, B01J 19/20, F26B 3/20, F26B 11/04

(54) **Liegender Rohrreaktor zur Behandlung von pastösem Gut oder Schüttgut**
Horizontal drum reactor for the treatment of pasty or granular material
Réacteur cylindrique couché pour le traitement de matière pâteuse ou granulaire

(30) Priorität: 18.05.1996 DE 19620116
(43) Veröffentlichungstag der Anmeldung: 19.11.1997
(73) Patentinhaber: Max Aicher Umwelttechnik GmbH, 83395 Freilassing (DE)
(72) Erfinder: Meissner, Wolfgang, Dr.-Ing., 83395 Freilassing (DE); Steger, Martin, Dr.-Ing., 84307 Eggenfelden (DE)
(74) Vertreter: Patentanwälte Möll und Bitterich

(56) Entgegenhaltungen:
- WO-A-91/19145
- GB-A- 2 088 243
- US-A- 3 401 923
- US-A- 4 862 601

## Beschreibung

Die Erfindung betrifft einen nichtdrehenden Liegenden Rohrreaktor zur mechanischen und/oder thermischen Behandlung von pastösem Gut oder Schüttgut gemäß dem Oberbegriff des Patentanspruchs 1.

Für die mechanische und/oder thermische Behandlung von pastösem Gut oder Schüttgut, wie z.B. vorgetrockneten Industrie- oder Klärschlämmen, Abfällen oder dergleichen kennt man liegende Rohrreaktoren. Dabei unterscheidet man zwischen Drehrohrreaktoren und nichtdrehenden Reaktoren; letztere sind innen mit bewegten Förder- und/oder Umschichteinrichtungen ausgestattet. Bei der Behandlung solcher Materialien kommt es häufig zu Problemen durch Anbackungen und Verkrustungen, durch welche die mechanische Förderung und Umschichtung des zu behandelnden Gutes, insbesondere aber die Eintragung von Wärme in das Gut, über Heizflächen verhindert werden. Geschlossene, von außen über Kontaktflächen beheizte Reaktoren werden aber hinsichtlich des Materialdurchsatzes und der Behandlungstemperatur durch das Verhältnis von Heizfläche zu Reaktorinhalt bzw. Reaktordurchsatz begrenzt.

Für eine Vielzahl von Behandlungsverfahren sind aus den unterschiedlichsten Gründen nichtdrehende liegende Rohrreaktoren mit bewegten Umschicht- und Fördereinrichtungen zu bevorzugen. So können mit nichtdrehenden Rohrreaktoren gegenüber Drehrohrreaktoren vergleichsweise enge Verteilungen der Verweilzeiten erzielt werden, die durch Bildung von Kammern im Reaktorraum durch überfallwehre noch verbessert werden können. Insbesondere bei Materialien, die sich im Verlauf der Behandlung zumindest kurzzeitig verflüssigen oder durch ihre Konsistenz ein fließfähiges Verhalten zeigen, kann auf diese Weise ein Kurzschlußstrom durch den Reaktor vermieden werden. die Rückförderung der Füllkörper erforderlich, sondern bringt auch Wärmeverluste, die durch erneute Erwärmung der Kugeln an der Einlaufseite wieder ausgeglichen werden müssen.

US-A-4 862 601 und US-A-3401 923 beschreiben Rohrreaktoren zur Behandlung von Schüffgut unter Auwesehät von Mahl und/oder Abreinigungskörpes in Reaklorraum. Vor diesem Hintergrund liegt der Erfindung die Aufgabe zugrunde, bei einem nichtdrehenden liegenden Rohrreaktor der eingangs angegebenen Art eine Möglichkeit zu schaffen, den durch das Verhältnis von Heizfläche zu Reaktorinhalt begrenzten Materialdurchsatz zu verbessern.

Erfindungsgemäß wird diese Aufgabe durch die im Anspruch 1 angegebenen Merkmale gelöst.

Vorteilhafte Weiterbildungen ergeben sich aus den Unteransprüchen.

Die Erfindung hat bei der Behandlung von pastösen Materialien und von solchen, die bei Temperaturen unterhalb oder im Bereich der Behandlungstemperatur zum Verkleben und Verbacken neigen, den Vorteil, daß durch die Bewegung der Kugeln im Reaktorraum eine permanente Reinigung der Reaktorinnenwand und der Förder- sowie Umschichtorgane erfolgt, wodurch Anbackungen und Verstopfungen im Reaktor vermieden werden. Durch die Bewegung der Kugeln werden Grobkörner und Agglomerationen des zu behandelnden Materials aufgeschlossen; das Material wird gemahlen. Schon hierdurch werden die Reaktionsgeschwindigkeiten und die Umsatzraten deutlich gesteigert.

Der wesentliche Vorteil der Erfindung zeigt sich aber bei solchen thermischen Behandlungen, bei denen das zu behandelnde Material nach Eintrag in den Reaktorraum zunächst auf Reaktionstemperatur aufgeheizt werden muß. Der Materialdurchsatz durch den Reaktor wird hierbei durch die beschränkte Wärmeübertragungsfläche, die meist der Schließlich erfordert die Beheizung-des Rohrmantels bei feststehenden Reaktoren gegenüber solchen mit drehenden Rohren einen deutlich geringeren konstruktiven Aufwand und einen geringeren Wartungsaufwand.

Grundsätzlich ist es bekannt, in liegende Rohrreaktoren Festkörper einzuführen, die in dem Reaktorraum mit dem zu behandelnden Gut umgewälzt werden. So ist es beispielsweise bei der Herstellung von Ameisensäure, Essigsäure und Flußsäure bekannt, innerhalb einer mit Rührwerken versehenen nichtdrehenden Trommel Rollkörper anzuordnen, die bei der drehenden Bewegung des Rührwerks hochgehoben werden und stoßend und reibend aufeinander und gleichzeitig auf die Rührarme und Wandungen der Trommel wirken, so daß ein Anbacken innerhalb der Trommel vermieden wird (DE-PS 452 138). Die Rollkörper verbleiben dabei innerhalb der Trommel. Wenn, was bei kugel- oder ellipsenförmigen Rollkörpern möglich ist, die eine oder andere Kugel mit dem Gut aus der Trommel ausgeworfen wird, muß sie wieder in die Trommel eingeführt werden.

Bei einer Drehtrommel zur Destillation fester Brennstoffe, insbesondere bei niederen Temperaturen ist es auch bekannt, mit dem Destillationsgut als Wärmeüberträger dienende Festkörper einzuführen (DE-PS 375 461). Diese Festkörper wurden vorher auf die erforderliche und zulässige Destillationstemperatur erwärmt und geben ihre Wärme während des Durchlaufs des zu behandelnden Gutes an dieses ab. Diese Festkörper dienen nur als Wärmeträger in der selbst nicht beheizten Trommel. Sie werden im Auslaufbereich der Trommel von dem durch ein Trommelsieb hindurchfallenden Behandlungsgut getrennt und über einen außerhalb der Drehtrommel verlaufenden Kanal und eine Leitung zur Einlaufseite der Drehtrommel zurückgefördert, um dort erneut erwärmt und dem frischen Gut beigemischt zu werden. Dies macht nicht nur einen erheblichen apparativen Aufwand für Mantelfläche des Reaktors entspricht, begrenzt. Durch die Rückförderung der mit dem behandelten Gut aufgeheizten Kugeln vom heißen Reaktorende zum vorderen Reaktorbereich wirken diese als Wärmeträger, durch die Wärme von Reaktorteilen geringeren Wärmebedarfs (Reaktorende) zu Stellen hohen Wärmebedarfs (vorderer Reaktorbereich = Aufheizphase) transportiert wird. Besonders vorteilhaft wirkt sich hier aus, daß die Kugeln innerhalb der den Reaktorraum durchsetzenden Hohlwelle zurückgeführt werden, also im Bereich des Reaktorraumes selbst mit einer der Reaktionstemperatur entsprechenden Temperatur, so daß keine oder jedenfalls keine nennenswerten Wärmeverluste entstehen. Hierdurch kann der Materialdurchsatz bei gleicher Reaktorbaugröße gesteigert werden.

Die Erfindung wird nachstehend anhand der Zeichnung näher erläutert. Es zeigt
- Fig. 1: einen schematischen Längsschnitt durch einen Liegenden Rohrreaktor gemäß der Erfindung,

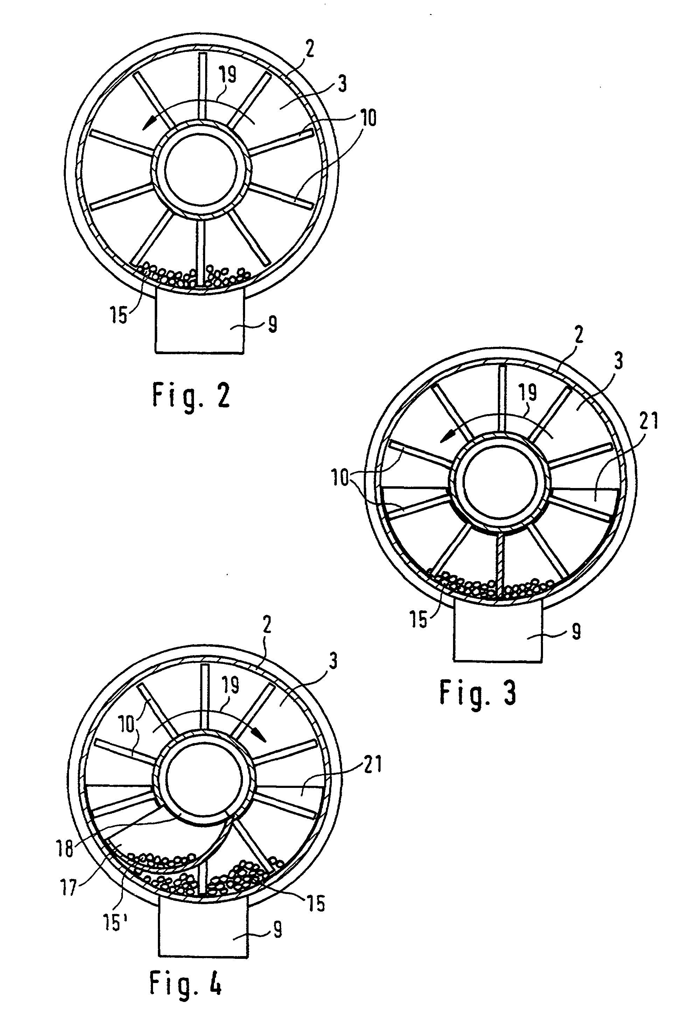

- Fig. 2: einen Querschnitt entlang der Linie A-A in Fig. 1,
- Fig. 3: einen Querschnitt entlang der Linie B-B in Fig. 1 und
- Fig. 4: einen Querschnitt entlang der Linie C-C in Fig. 1.

Anhand der Zeichnung wird die Erfindung am Beispiel eines liegenden Rohrreaktors zur thermischen und/oder mechanischen Behandlung von pastösem Material oder von Schüttgut erläutert, insbesondere von vorgetrockneten industriellen oder kommunalen Klärschlämmen, Abfällen oder dergleichen.

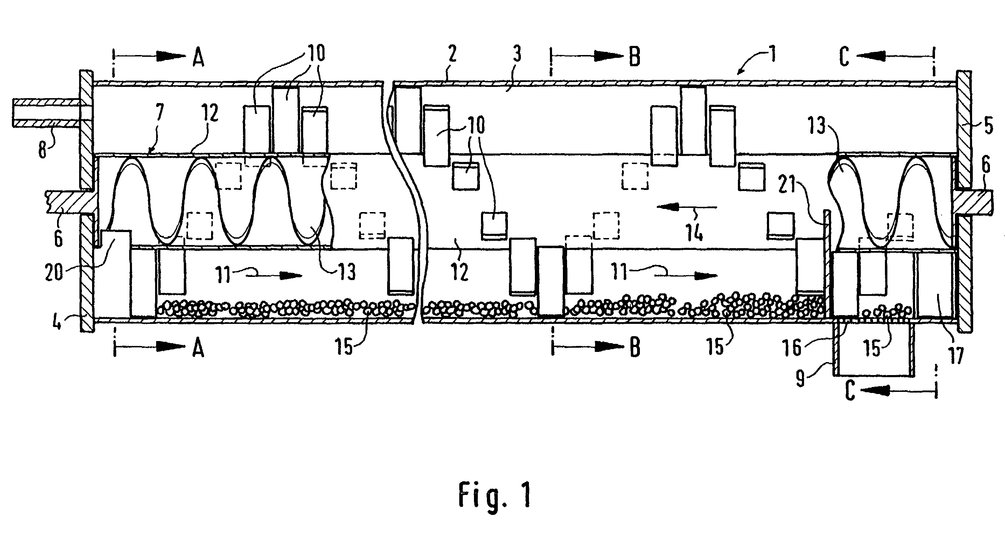

In Fig. 1 ist ein schematischer Längsschnitt durch einen liegenden Rohrreaktor 1 mit festem Mantelrohr 2 dargestellt. Der innerhalb des Mantelrohres 2 gebildete Reaktorrraum 3 wird durch eine vordere Stirnwand 4 und und eine rückwärtige Stirnwand 5 begrenzt. In den Stirnwänden 4 und 5 ist eine Welle 6 drehbar gelagert, die innerhalb des Reaktorraumes 3, also zwischen den Stirnwänden 4 und 5, als Hohlwelle 7 ausgebildet ist.

Das Mantelrohr 2 wird - wie nicht eigens dargestellt - in an sich bekannter Weise von außen beheizt; hierzu kann der Mantel als Doppelmantel ausgebildet sein, in dem ein Wärmeträgermedium kursiert. Die dort eingetragene Wärme wird durch den Mantel 2 an das im Reaktorraum 3 befindliche zu behandelnde Gut abgegeben, das durch einen am vorderen Ende des Reaktors 1 vorgesehenen Materialeintrag 8 eingetragen und nach Durchlauf durch den Reaktorraum 3 durch einen der rückwärtigen Stirnwand 4 benachbarten Materialaustrag 9 ausgetragen wird.

Im Beispiel des dargestellten nichtdrehenden Rohrreaktors ist die Hohlwelle 7 als Förder- und Umschichteinrichtung ausgebildet und zu diesem Zweck mit Paddeln 10 bestückt; anstelle solcher Paddel könnte auch eine Förderschnecke vorgesehen sein. Durch die Paddel 10 wird das zu behandelnde Gut in Richtung der Pfeile 11 gefördert.

Innerhalb des Mantels 12 der Hohlwelle 7 ist eine Förderschnecke 13 angeordnet, deren Förderrichtung (Pfeil 14) derjenigen der Förderung des Gutes (Pfeile 11) im Reaktorraum entgegengerichtet ist. Die Förderschnecke 13 ist mit dem Mantel 12 der Hohlwelle 7 fest verbunden und rotiert so im gleichen Drehsinn und mit gleicher Drehzahl wie die Hohlwelle 7.

Der Reaktor 1 ist bis zu einer bestimmten Füllhöhe mit kugelförmigen Füllkörpern 15 befüllt. Die Füllhöhe ist abhängig vom Einsatz des Reaktors und von der Art des zu behandelnden Gutes. Ebenfalls abhängig vom Einsatzzweck des Reaktors können die Füllkörper 15 aus unterschiedlichen Werkstoffen, z.B. Stahl, andere Metalle, Keramik oder dergleichen, bestehen; die Durchmesser der Kugeln können 20 bis 25 mm betragen. Die Kugeln 15 werden mit dem zu behande Lnden Material in dessen Förderrichtung (Pfeil 11) durch den Reaktorraum 3 gefördert.

An dem - in Förderrichtung gesehen - Ende des Reaktorraumes 3 ist der Materialaustrag 9 durch eine Siebeinrichtung 16, z.B. in Form eines Loch- oder Schlitzblechs, abgedeckt, durch welche das behandelte Gut hindurchfallen kann, die Kugeln 15 aber zurückgehalten werden. Der Austrag des Gutes wird durch die Bewegung der Kugeln 15 auf der Siebeinrichtung 16 noch begünstigt.

In dem Bereich hinter der Siebeinrichtung 16 ist ein Aufnehmer 17 für die Kugeln vorgesehen, der anhand Fig. 4 erläutert werden kann. Der Aufnehmer 17 besteht aus einer kreissegmentförmigen, schaufelartigen Aufnahmevorrichtung, die, ähnlich wie die Paddel 10, am Mantel 12 der Hohlwelle 7 befestigt ist und sich mit ihrem radial außenliegenden Ende an der Innenwand des Mantelrohrs 2 entlangbewegt. Im Bereich dieses Aufnehmers 17 weist der Mantel 12 der Hohlwelle eine Durchbrechung 18 auf.

Wie insbesondere Fig. 4 zeigt, wird bei jeder Umdrehung der Hohlwelle 7 in Richtung des Pfeils 19 von den am Grunde des Mantelrohrs 2 liegenden Kugeln 15 eine bestimmte Anzahl aufgenommen; sie rollen bei fortgesetzter Drehung der Hohlwelle 7 entlang der gekrümmten Bodenfläche des Aufnehmers 17 radial nach innen. Durch die Durchbrechung 18 gelangen die aufgenommenen Kugeln. 15' in den Innenraum der Hohlwelle 7 und so in den Einflußbereich der Innenschnecke 13, durch die sie in Richtung des Pfeils 14 (Fig. 1) zum Eintragsende des Reaktors 1 transportiert werden. Dort besitzt der Rohrmantel 12 am Ende der Innenschnecke 13 wiederum eine Durchbrechung 20, durch welche die Kugeln 15' wieder in den Reaktorraum 3 austreten und sich dem dort frisch zugegebenen Gut zumischen können.

Durch die Ausförderung der beim Durchgang durch den Reaktorraum 3 aufgeheizten Kugeln am Austragsende und deren Rückförderung innerhalb des Reaktorraumes, also auch innerhalb des von außen beheizten Raumes, verlieren die Kugeln nur sehr wenig an Wärme, so daß sich durch die Zumischung der noch heißen Kugeln zu dem frisch eingetragenen Gut eine bedeutend schnellere Aufheizung dieses Gutes ergibt.

Der Reaktorraum 3 kann in axialer Richtung durch wehrartige Wände in einzelne Kammern unterteilt sein; insbesondere sollte vor dem Materialaustrag 9 ein solches Wehr 21 angeordnet sein, das der Vergleichmäßigung des Austrags sowohl des Materials, als auch der Kugeln dient.

## Patentansprüche

1. Nichtdrehender Rohrreaktor (1) mit horizontaler Achse zur mechanischen und/oder thermischen Behandlung von pastösem Gut oder Schüttgut unter Anwesenheit von kugelförmigen Mahl- undloder Abreinigungskörpem im Reaktorraum
- mit einer den Reaktorraum (3) axial durchsetzenden Hohlwelle (7), an deren Außenfläche Mittel zur Förderung bzw. Umschichtung des Materials und der kugelförmigen Körper (15) angeordnet sind und durch deren Innenraum die kugelförmigen Körper (15) entgegen der Förderrichtung des Materials gefördert werden,
- wobei die Hohlwelle (7) am Austragsende (9) für das Material einen Aufnehmer (17) zur Ausförderung der kugelförmigen Körper (15') aus dem Reaktorraum (3) und eine Durchbrechung (18) für deren Eintritt in die Hohlwelle (7) sowie am Eintragsende (8) für das Material eine Durchbrechung (20) für den Austritt der kugelförmigen Körper (15) in den Reaktorraum (3) aufweist und
- wobei innerhalb der Hohlwelle (7) als Fördermittel zur Rückführung der kugelförmigen Körper (15) eine Schnecke (13) mit der Förderrichtung (11) im Reaktorraum (3) entgegengesetzter Förderrichtung (14) angeordnet ist.

## Claims

1. A non-rotating tubular reactor (1) with a horizontal axis for the mechanical and/or heat treatment of paste-like material or bulk material in the presence of spherical grinding and/or cleaning bodies in the reactor chamber
- with a hollow shaft (7) passing axially through the reactor chamber (3), on the outer surface of which shaft there are provided means for conveying and/or turning over the material and the spherical bodies (15), and through the inner chamber of which the spherical bodies (15) are conveyed counter to the conveying direction of the material,
- wherein at the discharge end (9) for the material the hollow shaft (7) has a scoop (17) for removing the spherical bodies (15) from the reactor chamber (3) and has an opening (18) for their inlet into the hollow shaft (7), and also at the feed end (8) for the material has an opening (20) for the outlet of the spherical bodies (15) into the reactor chamber (3), and
- wherein inside the hollow shaft (7) there is provided a screw (13) as conveying means for recirculating the spherical bodies (15) in a conveying direction (14) which is opposed to the conveying direction (11) in the reactor chamber (3).

## Revendications

1. Réacteur tubulaire non rotatif (1) à axe horizontal pour le traitement mécanique et/ou thermique d'une marchandise pâteuse ou d'un produit en vrac, en présence d'éléments broyeurs et/ou d'éléments de nettoyage de forme sphérique dans le compartiment du réacteur
- avec un arbre creux (7) traversant le compartiment (3) du réacteur dans le sens axial, sur la surface externe duquel sont disposés des moyens pour le transport et le regroupement du matériau et des éléments sphériques (15), et dans l'espace intérieur duquel les éléments sphériques (15) sont transportés dans le sens opposé au sens de transport du matériau,
- l'arbre creux (7) présentant, à l'extrémité de déversement (9) pour le matériau, un réceptacle (17) pour l'extraction des éléments sphériques (15') hors du compartiment (3) du réacteur et un ouverture (18) pour leur entrée dans l'arbre creux (7) et à l'extrémité d'admission (8) pour le matériau, une ouverture (20) pour la sortie des éléments sphériques (15) dans le compartiment(3)du réacteur et
- une vis sans fin (13) étant disposée à l'intérieur de l'arbre creux (7) comme moyen de transport pour le recyclage des éléments sphériques (15) avec un sens de transport (14) opposé au sens de transport (11) dans le compartiment (3)du réacteur .
